# EUROPEAN PATENT SPECIFICATION

(11) **EP 2 239 082 B1**
(45) Date of publication and mention of the grant of the patent: **16.07.2014**
(21) Application number: 10250301.8
(22) Date of filing: 19.02.2010
(51) Int. Cl.: B23K 11/00, B23K 11/11, B23K 11/18, B23P 6/00

(54) **Method of repairing a hole using conductive heat resistance welding and a plug inside the hole ; and corresponding welding stack**
Verfahren zum Reparieren von einem Loch mittels leitendem Wärmewiderstandsschweißen eines Plug in dem Loch ; entsprechende Schweissen-Stapel
Procédé de réparation d'un trou au moyen de soudure par résistance conductive d'un bouchon dans le trou ; Empilement de soudage correspondant

(30) Priority: 30.03.2009 US 413947
(43) Date of publication of application: 13.10.2010
(73) Proprietor: United Technologies Corporation, Hartford, CT 06101 (US)
(72) Inventor: Bunting, Billie W., CT 06415 (US); Moor, James J., New Hartford, CT 06057 (US)
(74) Representative: Tomlinson, Kerry John

(56) References cited:
- GB-A- 1 493 155
- US-A- 3 673 373
- US-A1- 2005 173 493
- US-A1- 2006 096 955

## Description

The present disclosure relates to a method of repairing holes in a work piece. More particularly, the present disclosure relates to an improved method of repairing holes in a work piece using conductive heat resistance welding.

US 2006/0096955 A1, on which the preamble of claims 1 and 10 is based, and US 2005/0173493 A1 describe prior art conductive heat resistance welding techniques. US 3, 673, 373 and GB 1, 493, 155 describe exemplary gas-shielded are welding techniques.

An undesirable defect or hole located in a metallic work piece may be repaired by welding. Welding is a known process for joining materials by causing coalescence. For example, a damaged work piece and adjacent filler material are heated to form a molten pool in the area of the defect. The molten pool is then cooled to solidification thereby forming a weldment.

It is known to fill a defect or hole in the work piece with a consumable filler plug and sandwich the work piece between sacrificial donor plates to create a stack. The stack is further sandwiched between one or more layers of electrode backing plates, which are then brought into contact with welding electrodes. An electrical current is passed between the electrodes, thereby resistively heating the electrode backing plates and conductively heating the sacrificial donor plates, work piece, and consumable filler plug. The donor plates, work piece, and filler plug coalesce into a liquid pool within the hole, which is then cooled to form a weldment.

### SUMMARY

A method of repairing a hole in a work piece according to the present invention is defined in claim 1 and comprises placing a plug within the hole of the work piece and covering opposing top and bottom open end portions of the hole, as well as a portion of adjacent work piece, with a top donor sheet and a bottom donor sheet, respectively. A portion of the top donor sheet that is located above the hole is covered with at least one top electrode backing plate and a portion of the bottom donor sheet that is located beneath the hole is covered with at least one bottom electrode backing plate. The top electrode backing plate is contacted with a top electrode and the bottom electrode backing plate is contacted with a bottom electrode. Electrical current is transmitted between the top electrode and the bottom electrode to resistively heat the top and the bottom electrode backing plates and conductively heat a portion of the top and the bottom donor sheets, the plug, and the work piece to form a molten mixture that at least partially fills the hole. The top donor sheet and the bottom donor sheet are constrained with constraint plates that force the donor sheets against the work piece to contain the molten mixture within the hole. The constraint plates are spaced laterally away from the hole in the workpiece.

A welding stack for performing repairs according to the present invention is defined in claim 10, and comprises a work piece having a top surface, a bottom surface, and a hole extending from the top surface to the bottom surface. A plug is located within the hole. A top donor plate is in contact with the top surface of the work piece and a bottom donor plate is in contact with the bottom surface of the work piece, so that the hole is sandwiched between the top donor plate and the bottom donor plate. At least one top constraint plate is in contact with the top donor plate and at least one bottom constraint plate is in contact with the bottom donor plate. The constraint plates force the donor plates against the work piece to facilitate preventing expulsion of molten material from the hole during conductive heat resistance welding.

### BRIEF DESCRIPTION OF THE DRAWINGS

FIG. 1 is a perspective view of a work piece having defects.
FIG. 2 is a cross-sectional view of the work piece and defect taken on line 2-2 of FIG. 1.
FIG. 3 is a cross-sectional view of a welding stack according to the prior art.
FIG. 4 is a cross-sectional view of the welding stack from FIG. 3 after conductive heat resistance welding showing porosity, expulsion of molten material, and bent donor plates.
FIG. 5A is a top view of a welding stack in accordance with an exemplary embodiment of the present disclosure.

FIG. 5B is a cross-sectional view of the welding stack taken on line 5B-5B of FIG. 5A.

FIG. 6A is a top view of an alternative embodiment of a welding stack in accordance with another exemplary embodiment of the present disclosure.

FIG. 6B is a cross-sectional view of the welding stack taken on line 6B-6B of FIG. 6A.

### DETAILED DESCRIPTION

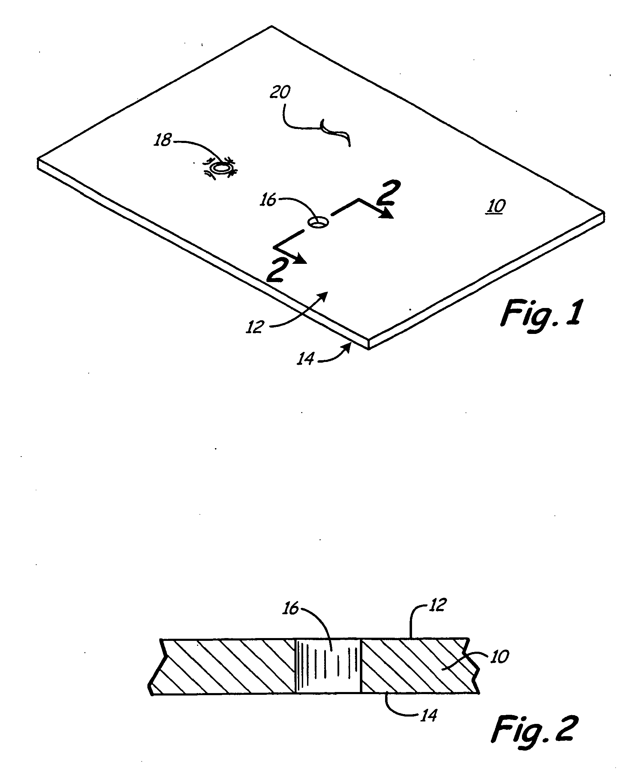

FIG. 1 is a perspective view of work piece 10 having top side 12, bottom side 14, and defects 16, 18, and 20. Work piece 10 may include any metal, such as but not limited to, aluminum and aluminum alloys. Top side 12 and bottom side 14 are substantially planar and parallel to one another. Defect or hole 16 is substantially cylindrical and extends through work piece 10 from top side 12 to bottom side 14, such that work piece 10 defines opposing top and bottom open end portions of hole 16. Defects 18 and 20 are dents or other imperfections located on top side 12 of work piece 10.

FIG. 2 is a cross-sectional view of work piece 10 having top side 12, bottom side 14, and hole 16 taken on line 2-2 of FIG. 1. Work piece 10 may be an aluminum flange for use in the aircraft industry, and hole 16 may be formed from insertion of a bolt into work piece 10. If hole 16 is undesirable it can be filled by conductive heat resistance welding.

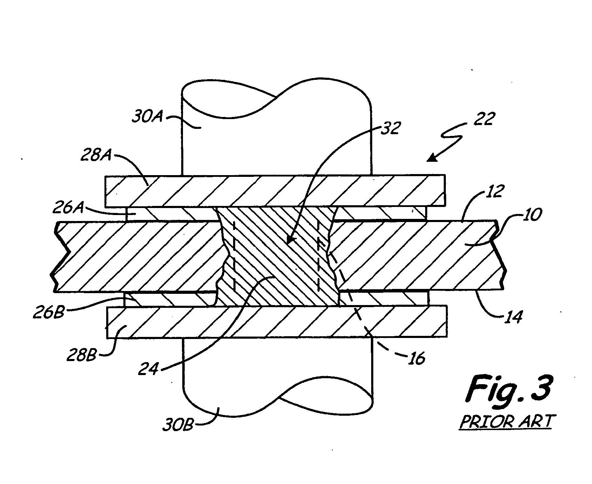

FIG. 3 is a cross-sectional view of prior art welding stack 22 using conductive heat resistance welding as known in the art. Welding stack 22 includes work piece 10, top side 12, bottom side 14, hole 16, plug 24, top and bottom donor sheets 26 (26A and 26B), top and bottom electrode backing plates 28 (28A and 28B), top and bottom electrodes 30 (30A and 30B), and molten pool 32. Welding stack 22 having work piece 10 is constructed to at least partially fill hole 16 by conductive heat resistance welding.

To form prior art welding stack 22, work piece 10 having hole 16 and plug 24 is sandwiched between donor sheets 26A, 26B, electrode backing plates 28A, 28B, and electrodes 30A, 30B. Plug 24 is substantially cylindrical and smaller than hole 16 so that plug 24 fits inside of hole 16. Plug 24 is consumed by the welding process and is formed of the same material as work piece 10. A top end of hole 16, as well as top side 12 of work piece 10 adjacent hole 16, are covered by top donor sheet 26A. Similarly, a bottom end of hole 16, as well as bottom side 14 of work piece 10 adjacent hole 16, are covered by bottom donor sheet 26B. Donor sheets 26A, 26B are consumable by the welding process and are formed of the same material as work piece 10. Although donor sheets 26A, 26B are shown singularly, there can be additional layers of donor sheets in succession. A top side of top donor sheet 26A is covered by top electrode backing plate 28A and a bottom side of bottom donor sheet 26B is covered by bottom electrode backing plate 28B. Thus, electrode backing plates 28A, 28B sandwich donor sheets 26A, 26B that sandwich work piece 10 to create stack 22. Electrode backing plates 28A, 28B include substantially circular plates and are located in vertical alignment or centrally above and beneath hole 16. Electrode backing plates 28A, 28B, can be formed of steel or any other material having a higher melting temperature than the melting temperature of donor sheets 26A, 26B. Although electrode backing plates 28A, 28B are shown singularly, there can be additional layers of electrode backing plates in succession. A top side of top electrode backing plate 28A is in contact with top electrode 30A and a bottom side of bottom electrode backing plate 28B is in contact with bottom electrode 30B. Molten pool 32 is located in a center of welding stack 22 and encompasses the area of hole 16 as well as a portion of work piece 10, and donor sheets 26A, 26B.

Electrical current is transmitted through an approximate center of welding stack 22 by electrodes 30A, 20B. Electrode backing plates 28A, 28B are resistively heated by electrodes 30A, 30B and donor sheets 26A, 26B are conductively heated by electrode backing plates 28A, 28B. The conductive heating of donor sheets 26A, 26B also conductively heats plug 24 and work piece 10 adjacent hole 16 so that donor sheets 26A, 26B, plug 24, and work piece 10 form molten pool 32 in the area of hole 16. When current to electrodes 30A, 30B is turned off or electrodes 30A, 30B are withdrawn from stack 22, molten pool 32 cools and solidifies into a weldment.

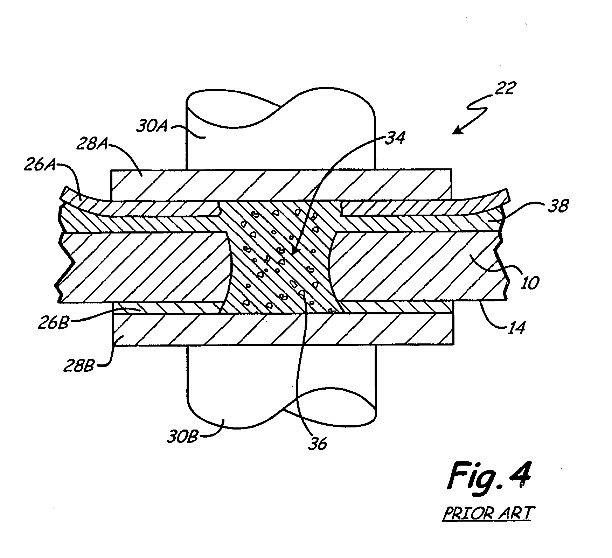

FIG. 4 is a cross-sectional view of the welding stack from FIG. 3 after conductive heat resistance welding showing porosity, expulsion of molten material, and bent donor plates. Depicted in FIG. 4 are welding stack 22 including work piece 10, top side 12, bottom side 14, hole 16, top and bottom donor sheets 26, top and bottom electrode backing plates 28, and top and bottom electrodes 30, weldment 34, voids 36, and expulsed material 38. As described above, donor sheets 26A, 26B, plug 24, and work piece 10 adjacent hole 16, are all conductively heated to form molten pool 32. When cooled, molten pool 32 forms weldment 34 in the area where hole 16 was located on work piece 10.

Located within, and scattered throughout weldment 34, are voids 36. Most materials, including aluminum and aluminum alloys, shrink during solidification causing cracking, porosity, or voids 36 in weldment 34. Voids are highly undesirable as they reduce the strength and other mechanical properties of both weldment 34 and the overall work piece 10. The area of work piece 10 surrounding weldment 34 is deformed or "sucked in". Furthermore, donor plates 26 are deformed and curving away from weldment 34. The deformation of work piece 10, weldment 34, and/or donor plates 26 is undesirable as it indicates the presence of unsatisfactory weldment 34. Expulsed material 38 was part of molten pool 32 that escaped upwardly and outwardly from hole 16 during the welding process and hardened to a bottom surface or a top surface of top donor sheet 26A and/or top electrode backing plate 28A. Expulsed material 38 is undesirable as it is a sign of a non-uniform weld. Expulsed material 38 often reduces the volume of molten pool 32 leaving voids 36 within hole 16 thereby creating an unsatisfactory weldment 34. There is a need to improve the quality and consistency of weldments 34 formed using prior art stack 22 with conductive heat resistance welding.

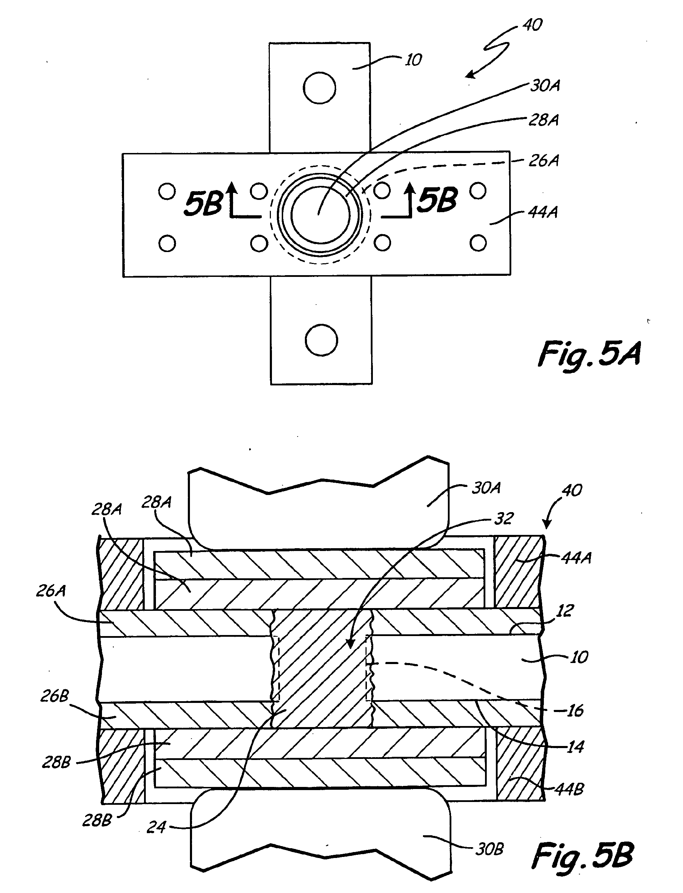

FIG. 5A is a top view and FIG 5B is a cross-sectional view of welding stack 40 in accordance with an exemplary embodiment of the present disclosure. Welding stack 40 includes work piece 10, top side 12, bottom side 14, hole 16, plug 24, donor sheets 26A, 26B, electrode backing plates 28A, 28B, electrodes 30A, 30B, molten pool 32, and constraint plates 44A, 44B. The components of welding stack 40 are arranged similarly to the components of prior art welding stack 22 described above with reference to FIG. 3. A difference between prior art welding stack 22 and welding stack 40 in accordance with the present disclosure is the presence of constraint plates 44A, 44B. Constraint plates 44A, 44B are substantially planar, can include a space or hole for circular electrode backing plates 28A, 28B, and are spaced laterally or horizontally from electrode backing plates 28A, 28B. Top constraint plate 44A is in contact with, and substantially covers top donor sheet 26A. Similarly, bottom constraint plate 44B is in contact with, and substantially covers bottom donor sheet 26B. Constraints plates 44A, 44B are secured to welding stack 40 by clamps or bolts or the like.

Constraint plates 44A, 44B provide mechanical restraint to donor sheets 26A, 26B, respectively, by forcing donor sheets 26A, 26B centrally toward work piece 10. By constraining donor sheets 26 toward work piece 10, hydrostatic pressure within hole 16 is maintained and molten pool 32 is not expulsed during the welding process. While electrode backing plates 28A, 28B provide some force to donor sheets 26A, 26B located in substantial vertical alignment directly above hole 16, constraint plates 44A, 44B provide substantial force to donor sheets 26A, 26B peripherally or at a location spaced laterally or horizontally away from hole 16. In the depicted embodiments, a space or recess for electrode backing plates 28A, 28B and electrodes 30A, 30B is cut out of constraint plates 44A, 44B. Constraint plates 44A, 44B facilitate preventing cracks and/or deformation of donor sheets 26A, 26B during welding. By keeping donor sheets 26A, 26B stiff and pressed against work piece 10, molten pool 32 has no path to escape hole 16 and therefore, the resulting weldment is substantially free of voids.

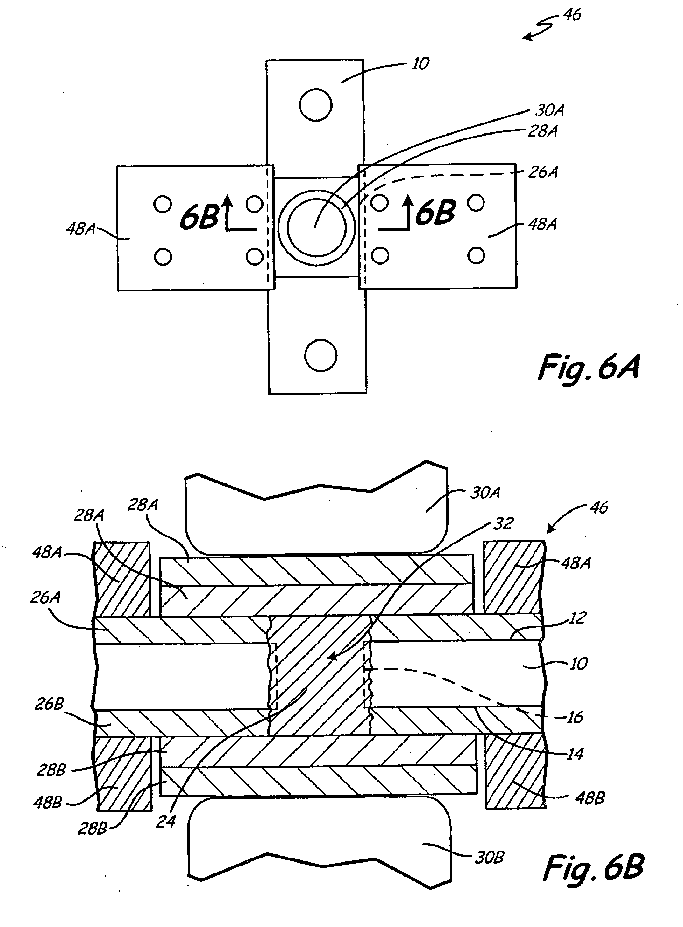

FIG. 6A is a top view and FIG. 6B is a cross-sectional view of an alternative embodiment of welding stack 46 in accordance with the present disclosure. Welding stack 46 includes work piece 10, top side 12, bottom side 14, hole 16, plug 24, donor sheets 26A, 26B, electrode backing plates 28A, 28B, electrodes 30A, 30B, molten pool 32, and constraint plates 48A, 48B. The components of welding stack 46 are arranged similarly to the components of welding stack 40 described above with reference to FIGS. 5A & 5B. A difference between welding stack 40 and welding stack 46 is constraint plates 48A, 48B. While welding stack 40 includes a single top constraint plate 44A and a single bottom constraint plate 44B both having cut-outs, welding stack 46 includes two top constraint plates 48A and two bottom constraint plates 48B. Constraint plates 48A, 48B are located on either side of, and spaced apart from electrode backing plates 28A, 28B and electrodes 30A, 30B, respectively. Top constraint plates 48A are in contact with, and substantially cover top donor sheet 26A. Similarly, bottom constraint plates 48B are in contact with, and substantially cover bottom donor sheet 26B. Constraints plates 48A and 48B are secured to welding stack 46 by clamps or bolts or the like.

As described above, constraint plates 48A, 48B provide mechanical restraint to donor sheets 26A, 26B by forcing donor sheets 26A, 26B toward work piece 10. The functionality of constraint plates 48A, 48B is similar to constraint plates 44A, 44B. By keeping donor sheets 26A, 26B pressed against work piece 10, molten pool 32 has no path to escape hole 16 and therefore, the resulting weldment is substantially free of voids. After conductive heat resistance welding is applied to welding stack 40 or 46, any unconsumed portion of donor sheets 26A, 26B, electrode backing plates 28A, 28B, electrodes 30A, 30B, constraint plates 44A, 44B, 48A, 48B are removed from work piece 10. If any excess, extraneous, or undesirable material remains attached to work piece 10 after welding, it can be removed so that the mechanical properties of the repaired work piece 10 are similar to the mechanical properties of original work piece.

Vertical, horizontal, above, beneath, top and bottom have been used through the specification to help describe relative directions. Although the present disclosure has been described with reference to exemplary embodiments, workers skilled in the art will recognize that changes may be made in form and detail without departing from the scope of the invention, which is defined by the appended claims.

## Claims

1. A method of repairing a hole (16) in a work piece (10), the method comprising:
placing a plug (24) within the hole (16) of the work piece (10);
covering opposing top and bottom open end portions of the hole (16), as well as a portion of
adjacent work piece (10), with a top donor sheet (26A) and a bottom donor sheet, (26B) respectively;
covering a portion of the top donor sheet (26A) that is located above the hole (16) with at least one
top electrode backing plate (28A) and covering a portion of the bottom donor sheet (26B) that is located beneath the hole (10) with at least one bottom electrode backing plate (28B) so that each backing plate (28A, 28B) is in contact with its corresponding donor sheet (26A, 26B); and **characterised by** the following steps:
covering a portion of the top donor sheet (26A) with a top constraint plate (44A,48A) and
covering a portion of the bottom donor sheet (26B) with a bottom constraint plate (44B,48B), so that each constraint plate (44A, 48A) is in contact with its corresponding donor sheet (26A, 26B);
contacting the top electrode backing plate (28A) with a top electrode (30A) and contacting the
bottom electrode backing plate (28B) with a bottom electrode (30B);
transmitting electrical current between the top electrode (30A) and the bottom electrode (30B) to
resistively heat the top and the bottom electrode backing plates (28A, 28B) and conductively heat a portion of the top and the bottom donor sheets (26A, 26B) the plug (24), and the work piece (10) to form a molten mixture (32) that at least partially fills the hole (16); and constraining the top donor sheet (26A) and the bottom donor sheet (26B) with the constraint plates (44A, 48A) to
force the donor sheets (26A, 26B) against the work piece (10) to contain the molten mixture within the hole(10); and
wherein the constraint plates (44A, 48A) are spaced laterally away from the hole (16) in the work piece (10).

2. The method of claim 1, wherein constraining the top and the bottom donor sheets (26A, 26B) against the work piece (16) produces hydrostatic pressure sufficient to form a weldment substantially free of porosity and expulsion.

3. The method of claim 1 or 2, further comprising:
cooling the molten mixture to form a weldment (34).

4. The method of claim 3, further comprising:
removing the top electrode (30A), the bottom electrode (30B) the top electrode backing plate (28A), the bottom electrode backing plate (28B), any unconsumed portion of the top donor sheet (26A), and any unconsumed portion of the bottom donor sheet (26B) from the work piece (10).

5. The method of claim 4, further comprising:
removing any extraneous material from the work piece (10).

6. The method of any preceding claim, wherein the work piece (10) is substantially planar and the hole (16) is substantially cylindrical.

7. The method of any preceding claim, wherein the plug (24) and the work piece (10) comprise the same metallic material.

8. The method of claim 7, wherein the metallic material is an aluminum composition.

9. The method of any preceding claim, wherein the constraint plates (44A, 48A) are secured together and to the donor sheets (26A, 26B).

10. A welding stack (22) for performing repairs, the stack comprising:
a work piece (10) having a top surface (12), a bottom surface (14), and a hole (16)
extending from the top surface (12) to the bottom surface (14);
a plug (24) located within the hole (16);
a top donor plate (26A) in contact with the top surface (12) of the work piece (10) and a bottom
donor plate (26B) in contact with the bottom surface (14) of the work piece (10), such that the hole (16) is sandwiched between the top donor plate (26A) and the bottom donor plate (26B) and
at least one top constraint plate (44A,48A) in contact with the top donor plate (26A) and at least one bottom constraint plate (44B,48B) in contact with the bottom donor plate (26B), wherein the constraint plates (44A, 48B) force the donor plates (26A, 26B) against the work piece (10) to facilitate preventing expulsion of molten material from the hole (16) during conductive heat resistance welding;
**characterised by**:
at least one top electrode backing plate (28A) in contact with the top donor plate (26A) and at least one bottom electrode backing plate (28B) in contact with the bottom donor plate (26B), wherein the constraint plates (44A, 48A) are spaced laterally away from the hole (16) in the work piece (10).

11. The welding stack of claim 10, further comprising:
a top electrode (30A) in contact with the top electrode backing plate (28A) and a bottom
electrode (30B) in contact with the bottom electrode backing plate (28B) for providing electrical current to the stack.

12. The welding stack of claim 10 or 11, wherein the plug (24), the donor sheets (26A, 26B), and the work piece (10) all comprise aluminum alloys.

13. The welding stack of claim 10,11 or 12, wherein the work piece (10) is substantially planar and the hole (16) is substantially cylindrical.

## Patentansprüche

1. Verfahren zum Reparieren eines Lochs (16) in einem Werkstück (10), wobei das Verfahren folgende Schritte aufweist:
Anordnen eines Stopfens (24) in dem Loch (16) des Werkstücks (10);
Bedecken von gegenüberliegenden oberen und unteren offenen Endbereichen des Lochs (16) sowie eines Bereichs des angrenzenden Werkstücks (10) mit einem oberen Spender-Flächenkörper (26A) bzw.
einem unteren Spender-Flächenkörper (26B);
Bedecken eines Bereichs des oberen Spender-Flächenkörpers (26A), der sich über dem Loch (16) befindet, mit mindestens einer oberen Elektrodenabstützplatte (28A) und Bedecken eines Bereichs des unteren Spender-Flächenkörpers (26B), der sich unter dem Loch (10) befindet, mit mindestens einer unteren Elektrodenabstützplatte (28B), so dass jede Abstützplatte (28A, 28B) mit ihrem entsprechenden Spender-Flächenkörper (26A, 26B) in Kontakt ist;
**gekennzeichnet durch** folgende Schritte:
Bedecken eines Bereichs des oberen Spender-Flächenkörpers (26A) mit einer oberen Begrenzungsplatte (44A, 48A) und Bedecken eines Bereichs des unteren Spender-Flächenkörpers (26B) mit einer unteren Begrenzungsplatte (44B, 48B), so dass jede Begrenzungsplatte (44A, 48A) mit ihrem entsprechenden Spender-Flächenkörper (26A, 26B) in Kontakt ist;
Kontaktieren der oberen Elektrodenabstützplatte (28A) mit einer oberen Elektrode (30A) und Kontaktieren der unteren Elektrodenabstützplatte (28B) mit einer unteren Elektrode (30B);
Übertragen von elektrischem Strom zwischen der oberen Elektrode (30A) und der unteren Elektrode (30B), um die obere und die untere Elektrodenabstützplatte (28A, 28B) resistiv zu erwärmen sowie einen Bereich des oberen und des unteren Spender-Flächenkörpers (26A, 26B), den Stopfen (24) und das Werkstück (10) konduktiv zu erwärmen,
um eine geschmolzene Mischung (32) zu bilden, die das Loch (10) zumindest teilweise füllt; und
Einzwängen des oberen Spender-Flächenkörpers (26A) und des unteren Spender-Flächenkörpers (26B) mittels der Begrenzungsplatten (44A, 48A), um die Spender-Flächenkörper (26A, 26B) gegen das Werkstück (10) zu zwängen und die geschmolzene Mischung in dem Loch (10) einzuschließen; und
wobei die Begrenzungsplatten (44A, 48A) von dem Loch (16) in dem Werkstück (10) in seitlicher Richtung weg beabstandet sind.

2. Verfahren nach Anspruch 1,
wobei das Einzwängen des oberen und des unteren Spender-Flächenkörpers (26A, 26B) gegen das Werkstück (10) einen hydrostatischen Druck erzeugt, der ausreicht, um eine Schweißverbindung im Wesentlichen frei von Porosität und Schweißaustrieb zu bilden.

3. Verfahren nach Anspruch 1 oder 2, weiterhin aufweisend:
Kühlen der geschmolzenen Mischung zum Bilden einer Schweißverbindung (34).

4. Verfahren nach Anspruch 3, weiterhin aufweisend:
Entfernen der oberen Elektrode (30A), der unteren Elektrode (30B),
der oberen Elektrodenabstützplatte (28A), der unteren Elektrodenabstützplatte 28B sowie von jeglichem nicht verbrauchten Teil des oberen Spender-Flächenkörpers und jeglichem nicht verbrauchten Teil des unteren Spender-Flächenkörpers (26B) von dem Werkstück (10).

5. Verfahren nach Anspruch 4, weiterhin aufweisend:
Entfernen von jeglichem Fremdmaterial von dem Werkstück (10).

6. Verfahren nach einem der vorhergehenden Ansprüche,
wobei das Werkstück (10) im Wesentlichen eben ist und das Loch (16) im Wesentlichen zylindrisch ist.

7. Verfahren nach einem der vorhergehenden Ansprüche,
wobei der Stopfen (24) und das Werkstück (10) das gleiche metallische Material aufweisen.

8. Verfahren nach Anspruch 7,
wobei das metallische Material eine Aluminiumzusammensetzung ist.

9. Verfahren nach einem der vorhergehenden Ansprüche,
wobei die Begrenzungsplatten (44A, 48A) aneinander und an den Spender-Flächenkörpern (26A, 26B) befestigt werden.

10. Schweißstapel (22) zur Durchführung von Reparaturen, wobei der Stapel Folgendes aufweist:
ein Werkstück (10) mit einer oberen Oberfläche (12), einer unteren Oberfläche (14) und einem Loch (16), das sich von der oberen Oberfläche (12) bis zu der unteren Oberfläche (14) erstreckt;
einen Stopfen (24), der sich in dem Loch (10) befindet;
eine obere Spenderplatte (26A) in Kontakt mit der oberen Oberfläche (12) des Werkstücks (10) und eine untere Spenderplatte (26B) in Kontakt mit der unteren Oberfläche (14) des Werkstücks (10), so dass das Loch (109 zwischen der oberen Spenderplatte (26A) und der unteren Spenderplatte (26B) eingeklemmt ist; und
mindestens eine obere Begrenzungsplatte (44A, 48A) in Kontakt mit der oberen Spenderplatte (26A) und mindestens eine untere Begrenzungsplatte (44B, 48B) in Kontakt mit der unteren Spenderplatte (26B), wobei die Begrenzungsplatten (44A, 48B) die Spenderplatten (26A, 26B) gegen das Werkstück (10) zwängen, um das Verhindern eines Austriebs von geschmolzenem Material aus dem Loch (16) während des Widerstandsschweißens mit konduktiver Wärme zu erleichtern;
**gekennzeichnet durch**:
mindestens eine obere Elektrodenabstützplatte (28A) in Kontakt mit der oberen Spenderplatte (26A) sowie mindestens eine untere Elektrodenabstützplatte (28B) in Kontakt mit der unteren Spenderplatte (26B), wobei die Begrenzungsplatten (44A, 48A) von dem Loch (16) in dem Werkstück (10) in seitlicher Richtung weg beabstandet sind.

11. Schweißstapel nach Anspruch 10, weiterhin aufweisend:
eine obere Elektrode (30A) in Kontakt mit der oberen Elektrodenabstützplatte (28A) und eine untere Elektrode (30B) in Kontakt mit der unteren Elektrodenabstützplatte (28B), um dem Stapel elektrischen Strom zuzuführen.

12. Schweißstapel nach Anspruch 10 oder 11,
wobei der Stopfen (24), die Spender-Flächenkörper (26A, 26B) und das Werkstück (10) alle Aluminiumlegierungen aufweisen.

13. Schweißstapel nach Anspruch 10, 11 oder 12,
wobei das Werkstück (10) im Wesentlichen eben ist und das Loch (16) im Wesentlichen zylindrisch ist.

## Revendications

1. Procédé de réparation d'un trou (16) dans une pièce (10), le procédé comprenant les étapes consistant à :
placer un obturateur (24) dans le trou (16) de la
pièce (10) ;
recouvrir les portions d'extrémité supérieure et
inférieure opposées ouvertes du trou (16) ainsi qu'une portion de pièce adjacente (10) par une feuille donneuse supérieure (26A) et une feuille donneuse inférieure (26B), respectivement ;
recouvrir une portion de la feuille donneuse
supérieure (26A) qui est située au-dessus du trou (16) par au moins une plaque support d'électrode supérieure (28A) et recouvrir une portion de la feuille donneuse inférieure (26B) qui est située en dessous du trou (10) par au moins une plaque support d'électrode inférieure (28B) de sorte que chaque plaque support (28A, 28B) soit en contact avec sa feuille donneuse correspondante (26A, 26B) ; et **caractérisé par** les étapes suivantes consistant à :
recouvrir une portion de la feuille donneuse
supérieure (26A) par une plaque de contrainte supérieure (44A, 48A) et recouvrir une portion de la feuille donneuse inférieure (26B) par une plaque de contrainte inférieure (44B, 48B) de sorte que chaque plaque de contrainte (44A, 48A) soit en contact avec la feuille donneuse correspondante (26A, 26B) ;
mettre en contact la plaque support d'électrode
supérieure (28A) avec une électrode supérieure (30A) et mettre en contact la plaque support d'électrode inférieure (28B) avec une électrode inférieure (30B) ;
transmettre du courant électrique entre l'électrode
supérieure (30A) et l'électrode inférieure (30B) pour chauffer par résistance les plaques supports d'électrodes supérieure et inférieure (28A, 28B) et chauffer par conduction une portion des feuilles donneuses supérieure et inférieure (26A, 26B), l'obturateur (24) et la pièce (10) pour former un mélange fondu (32) qui remplisse au moins en partie le trou (16) ;
contraindre la feuille donneuse supérieure (26A) et la
feuille donneuse inférieure (26B) par les plaques de contrainte (44A, 48A) à presser les feuilles donneuses (26A, 26B) contre la pièce (10) pour contenir le mélange fondu dans le trou (10) et dans lequel les plaques de contrainte (44A, 48A) sont
espacées latéralement du trou (16) dans la pièce (10).

2. Procédé selon la revendication 1, dans lequel les feuilles donneuses supérieure et inférieure (26A, 26B) contre la pièce (16) produisent une pression hydrostatique suffisante pour former une soudure sensiblement exempte de porosité et d'expulsion.

3. Procédé selon la revendication 1 ou la
revendication 2, comprenant en outre :
le refroidissement du mélange fondu pour former une
soudure (34).

4. Procédé selon la revendication 3, comprenant en
outre :
le retrait de l'électrode supérieure (30A), de
l'électrode inférieure (30B), de la plaque support d'électrode supérieure (28A), de la plaque support d'électrode inférieure (28B), d'une partie non consommée quelconque de la feuille donneuse supérieure (26A) et d'une partie non consommée quelconque de la feuille donneuse inférieure (26B) de la pièce (10).

5. Procédé selon la revendication 4, comprenant en
outre :
le retrait de toute matière étrangère de la pièce (10).

6. Procédé selon l'une quelconque des revendications précédentes, dans lequel la pièce (10) est sensiblement plane et le trou (16) est sensiblement cylindrique.

7. Procédé selon l'une quelconque des revendications précédentes, dans lequel l'obturateur (24) et la pièce (10) comprennent le même matériau métallique.

8. Procédé selon la revendication 7, dans lequel le matériau métallique est une composition d'aluminium.

9. Procédé selon l'une quelconque des revendications précédentes, dans lequel les plaques de contrainte (44A, 48A) sont fixées l'une à l'autre ainsi qu'aux feuilles donneuses (26A, 26B).

10. Pile de soudage (22) pour effectuer des
réparations, la pile comprenant :
une pièce (10) ayant une surface supérieure (12), une
surface inférieure (14) et un trou (16) s'étendant de la surface supérieure (12) à la surface inférieure (14) ;
un obturateur (24) situé dans le trou (16) ;
une plaque donneuse supérieure (26A) en contact avec
la surface supérieure (12) de la pièce (10) et une plaque donneuse inférieure (26B) en contact avec la surface inférieure (14) de la pièce (10) de sorte que le trou (16) soit pris en sandwich entre la plaque donneuse supérieure (26A) et la plaque donneuse inférieure (26B) ; et
au moins une plaque de contrainte supérieure (44A,
48A) en contact avec la plaque donneuse supérieure (26A) et au moins une plaque de contrainte inférieure (44B, 48B) en contact avec la plaque donneuse inférieure (26B), dans laquelle les plaques de contrainte (44A, 48B) pressent les plaques donneuses (26A, 26B) contre la pièce (10) pour faciliter la prévention de l'expulsion de matériau fondu du trou (16) au cours du soudage par conduction à haute résistance ;
**caractérisée par** :
au moins une plaque support d'électrode supérieure
(28A) en contact avec la plaque donneuse supérieure (26A) et au moins une plaque support d'électrode inférieure (28B) en contact avec la plaque donneuse inférieure (26B), dans laquelle les plaques de contrainte (44A, 48A) sont espacées latéralement du trou (16) dans la pièce (10).

11. Pile de soudage selon la revendication 10,
comprenant en outre :
une électrode supérieure (30A) en contact avec la
plaque support d'électrode supérieure (28A) et une électrode inférieure (30B) en contact avec la plaque support d'électrode inférieure (28B) pour fournir du courant électrique à la pile.

12. Pile de soudage selon la revendication 10 ou la revendication 11, dans laquelle l'obturateur (24), les feuilles donneuses (26A, 26B) et la pièce (10) comprennent tous des alliages d'aluminium.

13. Pile de soudage selon la revendication 10, 11 ou 12, dans laquelle la pièce (10) est sensiblement plane et le trou (16) est sensiblement cylindrique.
